# EUROPÄISCHE PATENTSCHRIFT

(11) **EP 2 689 664 B1**
(45) Veröffentlichungstag und Bekanntmachung des Hinweises auf die Patenterteilung: **14.10.2020**
(21) Anmeldenummer: 13166806.3
(22) Anmeldetag: 07.05.2013
(51) Int. Cl.: A21C 13/00, A21B 3/07, A21C 9/08, A21C 13/02

(54) **Verfahren und Anlage zur zeitlich begrenzten Aufnahme von Backgutträgern**
Method and installation for temporarily holding baking good carriers
Procédé et installation pour la réception limitée dans le temps de supports de produits cuits

(30) Priorität: 23.07.2012 DE 102012212855
(43) Veröffentlichungstag der Anmeldung: 29.01.2014
(73) Patentinhaber: Kaak Groep B.V., 7061 GA Terborg (NL)
(72) Erfinder: Fliszar, Günther, 27419 Kalbe (DE)
(74) Vertreter: Glawe, Delfs, Moll

(56) Entgegenhaltungen:
- WO-A1-2010/014006
- AT-A4- 508 652
- AT-B- 116 097
- DE-A1- 19 647 119

## Beschreibung

Die Erfindung betrifft ein Verfahren zum Betreiben einer Anlage zur zeitlich begrenzten Aufnahme von Backgutträgern in mehreren übereinanderliegenden Ebenen. Die Erfindung betrifft weiterhin eine Anlage zur Durchführung dieses Verfahrens.

In der EP 0 876 103 ist eine Anlage mit einem Gärraum zum zeitlich begrenzten Lagern von Teiglingen in mehreren übereinanderliegenden Ebenen offenbart. Die Teiglinge liegen dabei auf tablettförmigen flachen Paletten auf, wobei in jeder Ebene die Paletten derart eng nebeneinander liegen, dass ein Verschieben einer Palette zu einem Verschieben der anderen Paletten in derselben Ebene führt. An dem einen Ende des Gärraums ist eine Ladeeinrichtung vorgesehen, mit der die Paletten entsprechend in die einzelnen Ebenen eingeschoben werden können. Ein Ofen mit einer vergleichbaren Anordnung zum Transport von Paletten mit Teiglingen durch die Anlage ist aus WO 2010/014006 bekannt.

Nachteilig an diesem Stand der Technik ist, dass die Geschwindigkeit, mit der die einzelnen Paletten gemäß dem Stand der Technik bewegt werden können, begrenzt ist, da ansonsten Stöße auftreten, woraufhin die Teiglinge in Relativbewegung zu den Paletten, auf denen sie aufliegen, gelangen. Außerdem kommt es bei zu hohen Verschiebegeschwindigkeiten der Paletten beim anschließenden Abbremsen zu einem Verlust des Kontaktes zwischen zwei benachbarten Paletten. Um dies zu vermeiden, können Kopplungselemente zwischen den einzelnen Paletten vorgesehen sein. Diese sind aber sehr aufwendig.

Aufgabe der vorliegenden Erfindung ist, ein Verfahren, eine Anlage sowie Komponenten dieser Anlage zu schaffen, bei denen die Nachteile aus dem Stand der Technik nicht mehr oder nur noch in geringerem Maße auftreten.

Gelöst wird diese Aufgabe durch ein Verfahren gemäß dem Hauptanspruch sowie durch Anlagen gemäß des weiteren unabhängigen Anspruchs. Vorteilhafte Weiterbildungen ergeben sich aus den abhängigen Ansprüchen.

Demnach betrifft die Erfindung ein Verfahren zum Betreiben einer Anlage mit einem Aufgabeende und einem Ausgabeende zur zeitlich begrenzten Aufnahme von Backgutträgern in mehreren übereinanderliegenden Etagen, wobei die Backgutträger in den einzelnen Etagen derart eng nebeneinander liegen, dass ein Verschieben des dem Aufgabeende am nächstliegenden Backgutträgers einer Etage in Richtung des Ausgabeendes zu einem Verschieben des dem Ausgabeende am nächstliegenden Backgutträgers derselben Etage in die gleiche Richtung führt, wobei am Aufgabeende eine Beschickungsvorrichtung und am Ausgabeende eine Entnahmevorrichtung vorgesehen ist, mit den folgenden Schritten:
a. Zug- und druckfestes Kuppeln der Beschickungsvorrichtung mit einem einzuschiebenden Backgutträger;
b. Zug- und druckfestes Kuppeln der Entnahmevorrichtung mit dem, dem Ausgabeende nächstliegenden Backgutträger;
c. Bewegen der Beschickungsvorrichtung, so dass der einzuschiebende Backgutträger auf Stoß mit dem, dem Aufgabeende nächstliegenden Backgutträger liegt;
d. Synchrones Bewegen der Beschickungsvorrichtung und der Entnahmevorrichtung, so dass der einzuschiebende Backgutträger an die Stelle des dem Aufgabeende im Ausgangszustand nächstliegenden Backgutträgers rückt;
e. Bewegen der Entnahmevorrichtung, so dass der mit der Entnahmevorrichtung gekoppelte Backgutträger von den anderen Backgutträgern weggezogen wird;
f. Entkuppeln der Beschickungsvorrichtung; und
g. Entkuppeln der Entnahmevorrichtung.

Die Schritte a bis c sowie e bis g können jeweils auch in veränderter Reihenfolge durchgeführt werden (beispielsweise Schritte a und b bzw. f und g gleichzeitig, Schritte b und c bzw. e und f vertauscht, usw.).

Die Erfindung betrifft weiterhin eine Anlage mit einem Aufgabeende und einem Ausgabeende zur zeitlich begrenzten Aufnahme von Backgutträgern in mehreren übereinanderliegenden Etagen, wobei die Backgutträger in den einzelnen Etagen derart nebeneinander liegen, dass ein Verschieben des dem Aufgabeende am nächstliegenden Backgutträgers in Richtung des Ausgabeendes zu einer Verschiebung des dem Ausgabeende am nächstliegenden Backgutträgers derselben Etage in die gleiche Richtung führt, wobei am Aufgabeende eine Beschickungsvorrichtung und am Ausgabeende eine Entnahmevorrichtung vorgesehen ist und wobei die Beschickungsvorrichtung und die Entnahmevorrichtung jeweils eine Horizontalverschiebeeinheit umfassen, wobei die Horizontalverschiebeeinheit eine Kupplungseinheit für eine lösbare zug- und druckfeste Verbindung mit einem Backgutträger aufweist.

Durch das erfindungsgemäße Verfahren sowie die erfindungsgemäße Anlage ist es möglich, den Beschickungsvorgang einer Anlage zur zeitlich begrenzten Aufnahme von Backgutträgern in mehreren übereinanderliegenden Etagen mit einzelnen Backgutträgern gegenüber dem Stand der Technik deutlich zu beschleunigen. Dadurch können kürzere Verweilzeiten einzelner Backgutträger in der Anlage und/oder ein höherer Durchsatz von Backgutträgern bei der Anlage erreicht werden, wobei die einzelnen Etagen weiterhin individuell beschickt werden. Auch kann ein evtl. Produktwechsel in der Anlage mit dem erfindungsgemäßen Verfahren schneller als im Stand der Technik durchgeführt werden. Alternativ oder zusätzlich ist es möglich, eine Anlage mit mehr Etagen als im Stand der Technik erlaubt zu beschicken. Bei einer Anlage, die mit dem erfindungsgemäßen Verfahren beschickt wird, bzw. bei der erfindungsgemäßen Anlage kann es sich beispielsweise um einen Ofen oder einen Gärschrank handeln.

Erfindungsgemäß ist vorgesehen, dass die Beschickungsvorrichtung zug- und druckfest mit einem einzuschiebenden Backgutträger gekuppelt wird. Dies bietet den Vorteil, dass sich ein durch die Beschickungsvorrichtung in horizontaler Richtung bewegter Backgutträger auch beim Abbremsen oder Stoppen der Beschickungsvorrichtung nicht aufgrund der Impulserhaltung mit zunächst unverminderter Geschwindigkeit in horizontaler Richtung weiter bewegt und sich so von der Beschickungsvorrichtung entfernt. Vielmehr wird er aufgrund der Kupplung gleichzeitig mit der Beschickungsvorrichtung abgebremst oder angehalten. Indem der einzuschiebende Backgutträger fest an die Beschickungsvorrichtung angekuppelt ist, kann die Beschickungsvorrichtung beliebig beschleunigt und abgebremst werden, ohne dass der Backgutträger beispielsweise auf den, dem Aufgabeende nächstliegenden Backgutträger aufprallt. Während es im Stand der Technik erforderlich ist, den einzuschiebenden Backgutträger mit einer geringen Geschwindigkeit an den, dem Aufgabeende nächstliegenden Backgutträger heranzuführen, damit die beim Kontakt der beiden genannten Backgutträger unweigerlich auftretende Impulsübertragung so gering ist, dass die auf den Backgutträgern aufliegenden Teiglinge nicht verrutschen, kann erfindungsgemäß der einzuschiebende Backgutträger zunächst auf eine höhere Geschwindigkeit beschleunigt werden, um dann zur Vermeidung einer entsprechenden Impulsübertragung wieder abgebremst zu werden. Die für den Schritt (c) erforderliche Zeit kann gegenüber dem Stand der Technik so deutlich verkürzt werden. Es ist also bevorzugt, den einzuschiebenden Backgutträger beim erfindungsgemäßen Schritt (c) durch die Beschickungsvorrichtung zunächst zu beschleunigen und dann wieder abzubremsen. Dabei sind die Geschwindigkeitsänderungen beim Beschleunigen und/oder Abbremsen vorzugsweise so gewählt, dass die auf dem Backgutträger befindlichen Teiglinge nicht in Bewegung relativ zum Backgutträger geraten.

Weiter bevorzugt ist es, wenn das Bewegen der Beschickungsvorrichtung gemäß Schritt (c) für den daran gekuppelten Backgutträger im Wesentlichen stoßfrei ist. Das bedeutet, dass die Beschickungsvorrichtung derart abgebremst wird, dass die Geschwindigkeit der Beschickungsvorrichtung und damit die Geschwindigkeit des einzuschiebenden Backgutträgers beim Kontakt mit dem, dem Aufgabeende nächstliegenden Backgutträger kleiner als 50 mm/s, vorzugsweise kleiner als 20 mm/s, vorzugsweise kleiner als 10 mm/s, weiter vorzugsweise kleiner als 5 mm/s beträgt. Selbst wenn es zur geringen Impulsübertragung kommen sollte, besteht aufgrund der geringen Geschwindigkeit keine Gefahr, dass die auf den, an der Impulsübertragung beteiligten Backgutträgern befindlichen Teiglinge relativ zu den Backgutträgern in Bewegung geraten.

Durch das synchrone Bewegen der Beschickungsvorrichtung und der Entnahmevorrichtung in Schritt (d) wird sichergestellt, dass der einzuschiebende Backgutträger, der daran auf Stoß angrenzende, dem Aufgabeende nächstliegende Backgutträger und der dem Ausgabeende nächstliegende Backgutträger, sowie alle zwischen diesen Backgutträgern in der Etage befindlichen Backgutträgern gemeinsam bewegt werden. Die Backgutträger müssen dafür untereinander nicht besonders verbunden (bzw. gekuppelt) sein. Vielmehr ist es ausreichend, wenn die einzelnen Backgutträger auf Stoß nebeneinander liegen.

Indem der einzuschiebende Backgutträger und der dem Ausgabeende nächstliegende Backgutträger jeweils zug- und druckfest mit der Beschickungsvorrichtung bzw. der Entnahmevorrichtung gekuppelt sind, ist es möglich, die Backgutträger zu beschleunigen und abzubremsen, ohne dass die Gefahr besteht, dass zwischen den einzelnen Backgutträgern Abstände oder Lücken entstehen. Es ist also möglich, die Backgutträger in einer Etage beim erfindungsgemäßen Schritt (d) durch die Beschickungs- und Entnahmevorrichtung zunächst zu beschleunigen und dann wieder abzubremsen. Die für das Verschieben der Backgutträger erforderliche Zeit kann so gegenüber dem Stand der Technik deutlich verkürzt werden. Die Geschwindigkeitsänderungen beim Beschleunigen und/oder Abbremsen ist vorzugsweise so gewählt, dass die auf den Backgutträgern befindlichen Teiglinge nicht in Bewegung relativ zu den Backgutträgern geraten.

Nachdem die Backgutträger in einer Etage derart verschoben wurden, dass sich der einzuschiebende Backgutträger an der Position des im Ausgangszustand dem Aufgabeende nächstliegenden Backgutträgers befindet, werden die Backgutträger vollständig abgebremst. Anschließend kann der mit der Entnahmevorrichtung gekuppelte Backgutträger durch die Entnahmevorrichtung von den anderen Backgutträgern in dieser Etage weggezogen werden. Der entsprechende Backgutträger kann also aus der Anlage zur zeitlich begrenzten Aufnahme von Backgutträgern am Ausgabeende herausgezogen werden. Auch hier ist es wieder möglich, den Backgutträger zunächst zu beschleunigen und anschließend wieder abzubremsen, wobei die entsprechenden Geschwindigkeitsänderungen vorzugsweise so gewählt sind, dass die auf dem Backgutträger befindlichen Teiglinge nicht in Bewegung relativ zu dem Backgutträger geraten.

Abschließend werden die Beschickungsvorrichtung und die Entnahmevorrichtung von den jeweils mit ihnen verbundenen Backgutträgern entkuppelt, so dass das erfindungsgemäße Verfahren von vorne durchgeführt werden kann.

Das erfindungsgemäße Verfahren unterscheidet sich vom Stand der Technik unter anderem darin, dass zu jedem Zeitpunkt des Verfahrens die relative Lage der einzelnen Backgutträger in Bezug auf die Beschickungsvorrichtung und/oder die Entnahmevorrichtung eindeutig festgelegt ist und auch bei Geschwindigkeitsänderungen der Beschickungsvorrichtung und/oder Entnahmevorrichtung eindeutig festgelegt bleibt. Dadurch sind im Ergebnis höhere Maximalgeschwindigkeiten als im Stand der Technik möglich. Durch das erfindungsgemäße Verfahren ist es daher möglich die für die Beschickung einer Anlage zur zeitlich begrenzten Aufnahme von Backgutträgern mit einem Backgutträger erforderliche Zeit gegenüber dem Stand der Technik deutlich zu verkürzen. In der

Folge ist eine entsprechend dem erfindungsgemäßen Verfahren beschickte Anlage flexibler einsetzbar und kann einen höheren Durchsatz an Backgutträgern erreichen.

Der Durchsatz von Backgutträgern kann beim erfindungsgemäßen Verfahren noch weiter erhöht werden, wenn die Zeit zwischen Entkuppeln eines Backgutträgers (Schritt (f)) und dem erneuten Kuppeln mit einem einzuschiebenden Backgutträger (Schritt (a)) möglichst kurz ist. Dazu kann vorgesehen sein, dass ein einzuschiebender Backgutträger auf der Höhe der Etage der Anlage bereitgestellt wird, in die der Backgutträger eingeschoben werden soll, noch bevor er mit der Beschickungsvorrichtung gekuppelt wird. Nach dem Kuppeln muss der Backgutträger dann lediglich in horizontaler Richtung bewegt werden. Das Bereitstellen eines Backgutträgers kann wenigstens teilweise mit einem oder mehreren (b) bis (g), vorzugsweise der Schritte (d) bis (g) erfolgen.

Analog kann die Zeit zwischen Entkuppeln der Entnahmevorrichtung (Schritt (g)) und erneutes Kuppeln eines dem Ausgabeende nächstliegenden Backgutträgers mit der Entnahmevorrichtung (Schritt (b)) reduziert werden. So kann ein der Anlage entnommener Backgutträger auf der Höhe der Etage, auf der dieser von der Entnahmevorrichtung aus der Anlage gezogen wurde (d.h. ausschließlich in horizontaler Richtung), bereits entkuppelt werden. Der Backgutträger wird dann von dieser Position aus abtransportiert, während die Entnahmevorrichtung bereits mit dem nächsten Backgutträger kuppelt.

Die erfindungsgemäße Anlage ist zur Durchführung des erfindungsgemäßen Verfahrens ausgebildet. Es wird daher insbesondere auch auf die vorstehenden Ausführungen verwiesen.

Die erfindungsgemäße Anlage weist mehrere übereinander liegende Etagen auf, in denen Backgutträger zeitlich begrenzt aufgenommen werden können. Die Backgutträger in jeder Etage werden dabei jeweils von einem Aufgabeende zu einem Ausgabeende befördert, wobei die Backgutträger in den einzelnen Etagen derart eng nebeneinander liegen, dass ein Verschieben des dem Aufgabeende am nächstliegenden Backgutträgers in Richtung des Ausgabeendes zu einem Verschieben des dem Ausgabeende am nächstliegenden Backgutträgers derselben Etage in die gleiche Richtung führt. Am Aufgabeende ist eine Beschickungsvorrichtung, am Ausgabeende eine Entnahmevorrichtung vorgesehen. Die Beschickungsvorrichtung und die Entnahmevorrichtung weisen jeweils eine Horizontalverschiebeeinheit mit jeweils einer Kupplungseinheit für eine lösbare zug- und druckfeste Verbindung mit einem Backgutträger auf. Eine entsprechende Anlage ist zur Durchführung des erfindungsgemäßen Verfahrens geeignet.

Bei der erfindungsgemäßen Anlage kann es sich insbesondere um einen Ofen oder einen Gärschrank handeln.

Die Anlage kann in jeder Etage Führungen für die Backgutträger aufweisen. Dabei sind die Führungen bevorzugt in Richtung vom Aufgabeende zum Ausgabeende zu beiden Seiten der Backgutträger angeordnet, so dass die Backgutträger zwischen den gegenüberliegenden Führungen freischwebend sind. Zwischen den Führungen können bspw. Heizelemente angeordnet sein.

Die Führungen können beispielsweise als Führungsschienen ausgeführt sein. Die gegenüberliegenden Führungsschienen sind vorzugsweise nach innen geneigt. Dies bietet den Vorteil, dass auf die Führungsschienen gelangende Krümel oder sonstige Backreste nicht auf den Führungsschienen liegen bleiben und so das Bewegen der Backgutträger entlang der Führungsschienen behindern können.

Alternativ kann vorgesehen sein, dass die Führungen Rollenbahnen umfassen, auf denen die Backgutträger gleiten können. Es ist besonders bevorzugt, wenn die gegenüberliegenden Rollenbahnen einer Etage zur Mittelachse der Führung geneigte Rollen aufweisen. Alternativ können die Rollen zur Mittelachse der Führung konisch zulaufen. Dadurch kann eine automatische Führung der Backgutträger, die auf diesem Rollenbahnen laufen, gewährleistet werden. Dies gilt insbesondere dann, wenn die Backgutträger an ihren Seiten Führungsflächen aufweisen, deren Neigung der Neigung der Rollen der Rollenbahnen entspricht. Für entsprechende Führungen wird gegebenenfalls gesondert Schutz beantragt.

Unabhängig davon, wie die Führungen an der Anlage ausgestaltet sind, ist es bevorzugt, wenn die Führungen die Backgutträger bzw. die Rollen an den Backgutträgern so umgreifen, dass sich zwei in einer entsprechenden Führung geführte, benachbarte Backgutträger nicht aufeinander schieben können. Das Ausweichen eines Backgutträgers von der Führung weg, um sich auf den benachbarten Backgutträger zu schieben, wird also verhindert.

Es ist weiter bevorzugt, wenn die Anlage eine Regelungsvorrichtung umfasst, die die einzelnen Komponenten der Anlage entsprechend dem erfindungsgemäßen Verfahren (siehe oben) ansteuert.

Die Beschickungsvorrichtung der Anlage, umfasst vorzugsweise eine Horizontalfördereinrichtung, eine Vertikalfördereinrichtung und eine Horizontalverschiebeeinheit. Die Horizontalfördereinrichtung und die Vertikalfördereinrichtung sind derart ausgebildet, dass ein Backgutträger von der Horizontalfördereinrichtung an die Vertikalfördereinrichtung und/oder auch umgekehrt übergeben werden kann. Die Horizontalverschiebeeinheit weist eine Kupplungseinheit für eine lösbare zug- und druckfeste Verbindung mit einem Backgutträger auf und ist zum Schieben und/oder Ziehen eines Backgutträgers von der oder auf die Vertikalfördereinrichtung ausgebildet, wobei die Horizontalverschiebeeinheit unabhängig von der Vertikalfördereinrichtung in vertikaler Richtung verfahrbar ist.

Da die Horizontalfördereinrichtung, die Vertikalfördereinrichtung und die Horizontalverschiebeeinheit jeweils getrennte Antriebseinheiten aufweisen, lassen sich die drei Komponenten getrennt voneinander betreiben. So ist es beispielsweise möglich, dass - sobald die Vertikalfördereinrichtung einen Backgutträger von der Horizontalfördereinrichtung übernommen hat - die Horizontalfördereinrichtung bereits einen nächsten Backgutträger zur Übergabe an die Vertikalfördereinrichtung bereitstellt. Die Vertikalfördereinrichtung kann bereits einen nächsten Backgutträger auf die Höhe einer der Etagen der Anlage zur zeitlich begrenzten Aufnahme von Backgutträgern in mehreren übereinanderliegenden Etagen bereitstellen, während die Horizontalverschiebeeinheit noch mit dem vorherigen Backgutträger gekuppelt ist. Die entsprechende Vertikalförderung eines Backgutträgers kann beispielsweise bereits dann beginnen, sobald der vorherige Backgutträger von der Horizontalverschiebeeinheit von der Vertikalversorgungseinrichtung geschoben wurde.

Die Entnahmevorrichtung der Anlage kann im Wesentlichen baugleich, vorzugsweise baugleich, mit der beschriebenen Beschickungsvorrichtung ausgeführt sein. Die Kupplungseinheit muss hierbei insbesondere für das Ziehen eines Backgutträgers auf die Vertikalfördereinrichtung ausgebildet sein, die Vertikalfördereinrichtung muss einen Backgutträger an die Horizontalfördereinrichtung übergeben können. Bei der Entnahmevorrichtung kann die Vertikalfördereinrichtung einen Backgutträger bereits direkt nach dem Entkuppeln von der Horizontalverschiebeeinheit in vertikaler Richtung verfahren, während die Horizontalverschiebeeinheit bereits an den nächsten Backgutträger angekoppelt wird. Sobald die Vertikalfördereinrichtung einen Backgutträger an die Horizontalfördereinrichtung übergeben hat, kann die Vertikalfördereinrichtung bereits den nächsten Backgutträger aufnehmen, noch während die Horizontalfördereinrichtung den letzten Backgutträger weg befördert.

Indem die Horizontalverschiebeeinheit der Beschickungsvorrichtung und/oder der Entnahmevorrichtung getrennt von der jeweiligen Vertikalfördereinrichtung und/oder Horizontalfördereinrichtung bewegt werden kann, kann die Zeit zwischen Entkuppeln eines Backgutträger und dem erneuten Kuppeln mit einem anderen Backgutträger sehr kurz gehalten werden. Dadurch kann der Durchsatz von Backgutträgern bei dem erfindungsgemäßen Verfahren, wie beschrieben, weiter erhöht werden.

Bei der Vertikalfördereinrichtung kann es sich vorzugsweise um einen Paternoster handeln, wie er grundsätzlich im Bereich der vertikalen Förderung von Backgutträgern bekannt ist. Der Paternoster kann im Rahmen der Erfindung aber lediglich Hebeelemente für zwei Transportebenen aufweisen. Die Horizontalfördereinrichtung kann als umlaufendes Transportband ausgestaltet sein.

Die Horizontalverschiebeeinheit kann einen in horizontaler Richtung verschiebbaren Ausleger aufweisen. An dem einen Ende des Auslegers kann ein - vorzugsweise steifer - Haken zum Eingreifen in eine Ausnehmung in einem Backgutträger vorgesehen sein. Über einen entsprechenden Haken kann eine zu- und druckfeste Kupplung zwischen Horizontalverschiebeeinheit und Backgutträger erreicht werden. Das Kuppeln und Entkuppeln der Horizontalverschiebeeinheit mit dem Backgutträger kann dabei durch ein vertikales Verfahren der Horizontalverschiebeeinheit erreicht werden. Zum Kuppeln wird die Horizontalverschiebeeinheit derart abgesenkt, dass der Haken in eine entsprechende Ausnehmung im Backgutträger eingreift; zum Entkuppeln wird die Horizontalverschiebeeinheit derart nach oben verfahren, dass der Haken aus der Ausnehmung entfernt wird.

Für die Bewegung der Horizontalverschiebungseinheit in horizontaler Richtung, aber auch für das vertikale Verfahren derselben sind bevorzugt Servomotoren vorgesehen. Es kann auch vorgesehen sein, dass die Horizontalverschiebeeinheit zwei verschiebbare Ausleger mit Haken aufweist, wobei die einzelnen Komponenten zu beiden Seiten angeordnet sein können und gegebenenfalls gesonderte Antriebselemente aufweisen. In diesem Fall ist bevorzugt, wenn die Antriebselemente auf beiden Seiten das Backgutträgers durch eine Regelungseinrichtung synchron betrieben werden.

Ein Backgutträger - wie er vorzugsweise bei dem erfindungsgemäßen Verfahren bzw. der erfindungsgemäßen Anlage verwendet wird - kann bevorzugt an jeweils gegenüberliegenden Seiten angeordnete Rollen zum Rollen des Backgutträgers auf Führungen, bspw. Führungsschienen, aufweisen. Diese Rollen sind aus hitzebeständigem Material und weisen bevorzugt Spurkränze auf und/oder sind ausgehend vom Backgutträger nach außen hin konisch geformt. Durch entsprechende Ausgestaltung der Rollen kann eine Spursicherheit und/oder eine Selbstzentrierung in einer Führung ereicht werden, insbesondere dann, wenn die Führung Führungsschienen umfasst, die entsprechend dem Konuswinkel der Rollen geneigt sind.

Der Backgutträger kann aus beliebigem hitzebeständigem Material gefertigt sein. Besonders bevorzugt ist es aber, wenn der Backgutträger ein, mit einer oder mehrerer Steinplatten belegte Metallstruktur aufweist, wobei ggf. die Rollen und/oder die Ausnehmungen zum Eingriff von Kupplungseinheiten an oder in der Metallstruktur vorgesehen sein können.

Die Erfindung wird nun anhand von Ausführungsbeispielen unter Bezugnahme auf die beigefügten Zeichnungen beispielhaft beschrieben. Es zeigen:
- Figur 1: eine schematische Darstellung einer ersten Ausführungsform einer erfindungsgemäßen Anlage;
- Figur 2 a,b: schematische Darstellungen einer Beschickungsvorrichtung;
- Figuren 3 a-i: eine schematische, schrittweise Darstellung des erfindungsgemäßen Verfahrens anhand der Anlage aus Figur 1;
- Figur 4: schematische Geschwindigkeits-Zeit-Diagramme für das Verfahren aus Figuren 3 a-j;
- Figur 5: ein erstes Ausführungsbeispiel einer erfindungsgemäßen Führung mit einem Backgutträger;
- Figur 6 a,b: ein zweites Ausführungsbeispiel einer erfindungsgemäßen Führung mit einem Backgutträger; und
- Figur 7: ein drittes Ausführungsbeispiel einer erfindungsgemäßen Führung mit einem Backgutträger.
- Figur 8: eine schematische Darstellung einer zweiten Ausführungsform einer erfindungsgemäßen Anlage;

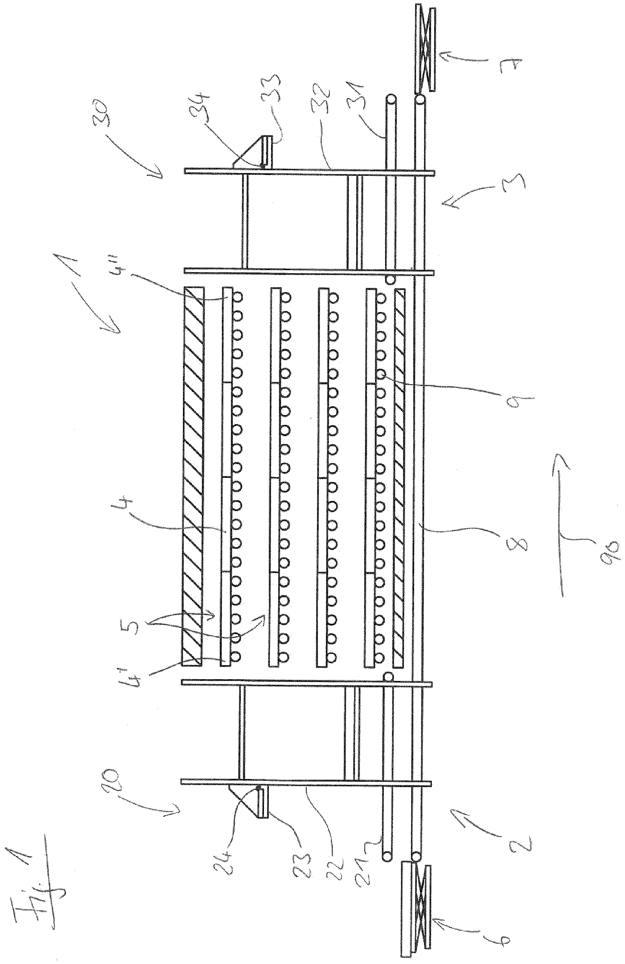

In Figur 1 ist eine erfindungsgemäße Anlage 1 zur zeitlich begrenzten Aufnahme von Backgutträgern 4 in mehreren übereinanderliegenden Etagen 5 dargestellt. Auf den einzelnen Backgutträgern 4 sind Teiglinge (nicht dargestellt) abgelegt, die innerhalb der Anlage 1 gebacken und/oder gegärt werden. Dazu können in der Anlage 1 Heizelemente, Lüfter, Luftbefeuchter, Bedampfer etc. vorgesehen seien. Im vorliegenden Ausführungsbeispiel handelt es sich bei der Anlage 1 um einen Ofen, weshalb im Inneren der Anlage 1 Heizelemente vorgesehen sind. Aus Gründen der Übersichtlichkeit sind die entsprechenden Elemente in Figur 1 jedoch nicht dargestellt.

Die Backgutträger 4 und die darauf befindlichen Teiglinge werden von einem Aufgabeende 2 durch die Anlage 1 zu einem Ausgabeende 3 gefördert. Während der Zeit, in der sich die Backgutträger 4 im Inneren der Anlage 1 befinden, können die darauf befindlichen Teiglinge gebacken und/oder gegärt werden. Die Bank- bzw. Gärdauer bestimmt sich dabei nach der Verweildauer eines Backgutträgers 4 in der Anlage 1, d.h. der Zeitraum, der benötigt wird, um den Backgutträger 4 vom Aufgabeende 2 zum Ausgabeende 3 zu befördern.

Die Anlage 1 weist mehrere Etagen 5 zur Aufnahme von Backgutträgern 4 auf. Dabei liegen die Backgutträger 4 in den einzelnen Etagen 5 auf jeweils einer Rollenbahn 9 derart eng beieinander, dass ein Verschieben des dem Aufgabeende 2 nächstliegenden Backgutträgers 4' in Richtung (vgl. Pfeil 90) des Ausgabeendes 3 zu einem Verschieben des dem Ausgabeende 3 nächstliegenden Backgutträgers 4" in dieselbe Richtung 90 führt. Die einzelnen Backgutträgern 4 sind dabei nicht miteinander verbunden oder gekuppelt sondern liegen nur auf Stoß nebeneinander.

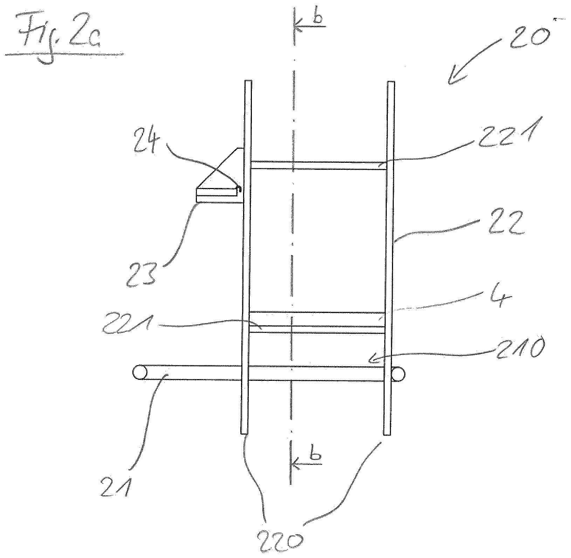

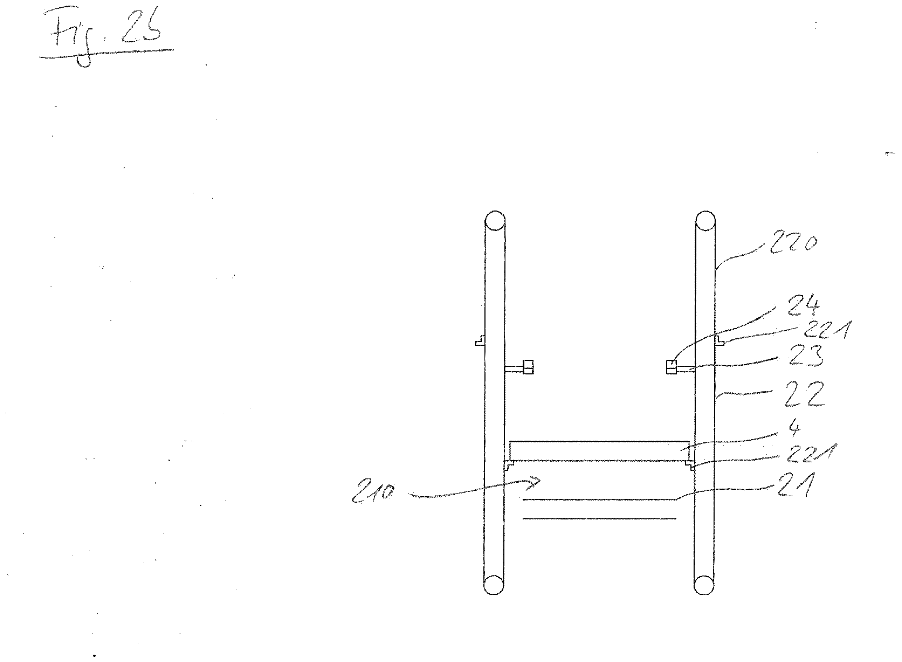

Am Aufgabeende 2 ist eine Beschickungsvorrichtung 20 vorgesehen, die in Figuren 2 a, b nochmals getrennt von der Anlage 1 dargestellt ist. Dabei ist die Figur 2b eine Schnittdarstellung entlang der Schnittlinie b-b in Figur 2a.

Die Beschickungsvorrichtung 20 umfasst eine Horizontalfördereinrichtung 21, eine Vertikalfördereinrichtung 22 und eine Einheit 23.

Mit der Horizontalfördereinrichtung 21 können einzelne Backgutträger 4 in horizontaler Richtung nacheinander zu einer Übergabeposition 210 befördert werden. An dieser Übergabeposition 210 kann jeweils ein Backgutträger 4 an die Vertikalfördereinrichtung 22 übergeben werden. Die Horizontalfördereinrichtung 21 ist als umlaufendes Transportband mit einem nicht dargestellten Antrieb ausgebildet, wobei die Breite des Transportbandes geringer ist als die Ausdehnung des Backgutträgers 4 in dieselbe Richtung (vergleiche Figur 2b).

Die Vertikalfördereinrichtung 22 ist als Paternoster ausgebildet. Zu beiden Seiten der Horizontalfördereinrichtung 21 ist jeweils ein Paar umlaufende Transportketten 220 vorgesehen, wobei die Transportketten 220 eines Paares jeweils durch zwei Hebeschienen 221 miteinander verbunden sind. Durch synchrones Betreiben der einzelnen Transportketten 220 zu beiden Seiten der Horizontalfördereinrichtung 21 ist es möglich, einen Backgutträger 4, der auf beiden Seiten der Horizontalfördereinrichtung 21 auf jeweils einer Hebeschiene 221, die dann eine Transportebene bilden, aufliegt, in vertikaler Richtung zu fördern (siehe auch Figur 2b).

Die Hebeschienen 221 sind dabei derart ausgestaltet, dass sie ausschließlich an Bereichen eines Backgutträgers 4 angreifen, die an der Übergabeposition 210 nicht auf der Horizontalfördereinrichtung 21 aufliegen.

Um ein synchrones Betreiben der einzelnen Transportketten 220 der Vertikalfördereinrichtung 22 zu gewährleisten, können diese mechanisch miteinander verbunden sein und durch eine einzelne, gemeinsame Antriebseinheit betrieben werden. Es ist aber auch möglich mehr als eine Antriebseinheit vorzusehen, wobei die Antriebseinheiten dann entsprechend geregelt werden, um das synchrone Betreiben der Transportketten 220 sicherzustellen.

Die Horizontalverschiebeeinheit 23 ist zum Schieben oder Ziehen eines Backgutträgers 4 von der oder auf die Vertikalfördereinrichtung 22 - bzw. von den oder auf die Hebeschienen 221 der Vertikalfördereinrichtung 22 - ausgebildet. Dazu weist die Horizontalverschiebeeinheit 23 eine als Haken ausgebildete Kupplungseinheit 24 auf, die lösbar eine zug- und druckfeste Verbindung mit einem Backgutträger 4 herstellen kann und in horizontaler Richtung verfahrbar ist. Für eine entsprechende Verbindung weist der Backgutträger 4 bevorzugt eine Ausnehmung auf, in die die als Haken ausgebildete Kupplungseinheit 24 eingreifen kann. Dazu ist die Horizontalverschiebeeinheit 23 getrennt von der Vertikalfördereinrichtung 22 in vertikaler Richtung verfahrbar. Sobald die Kupplungseinheit 24 mit einem Backgutträger 4 gekuppelt ist, kann die Horizontalverschiebeeinheit 23 den Backgutträger 4 in horizontaler Richtung verschieben, bspw. von den Hebeschienen 221 der Vertikalfördereinrichtung 22.

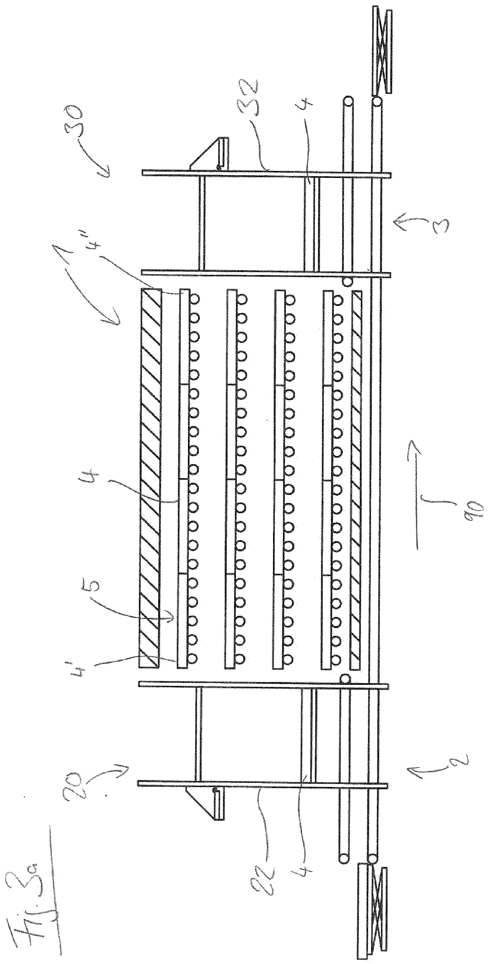

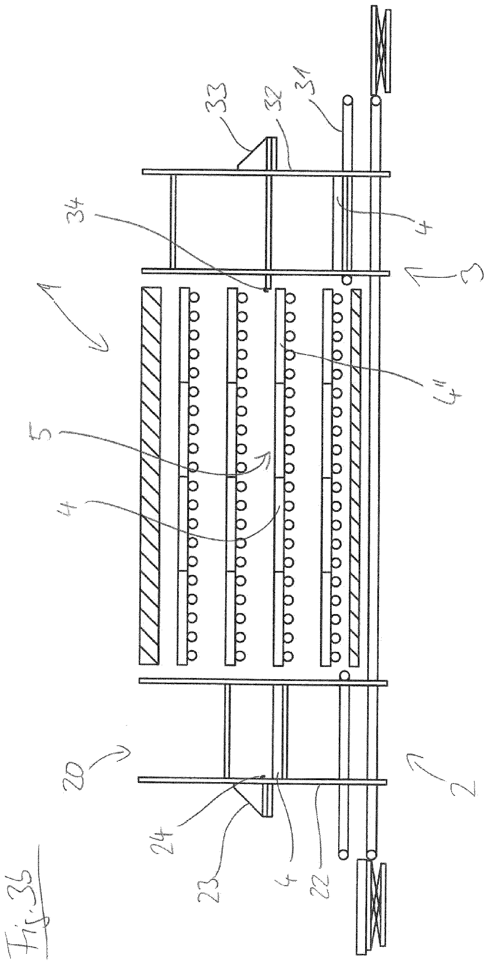

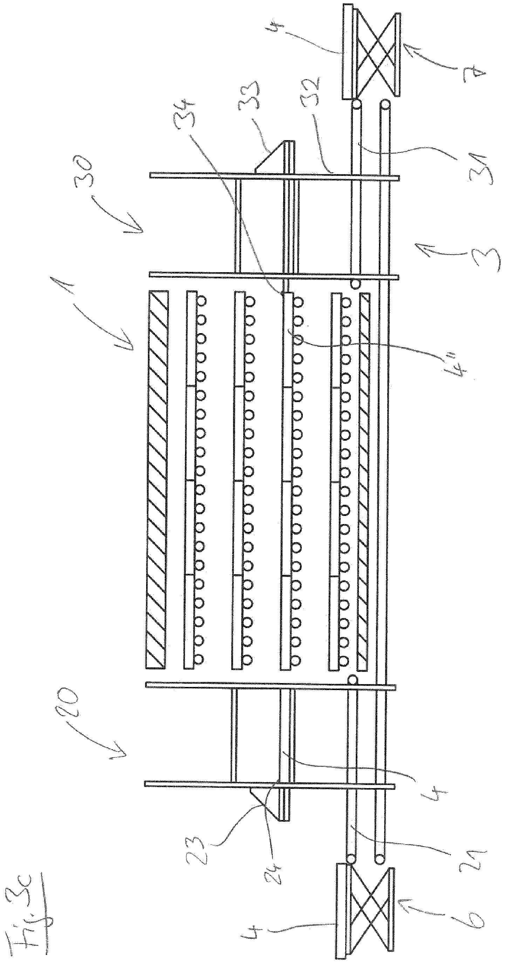

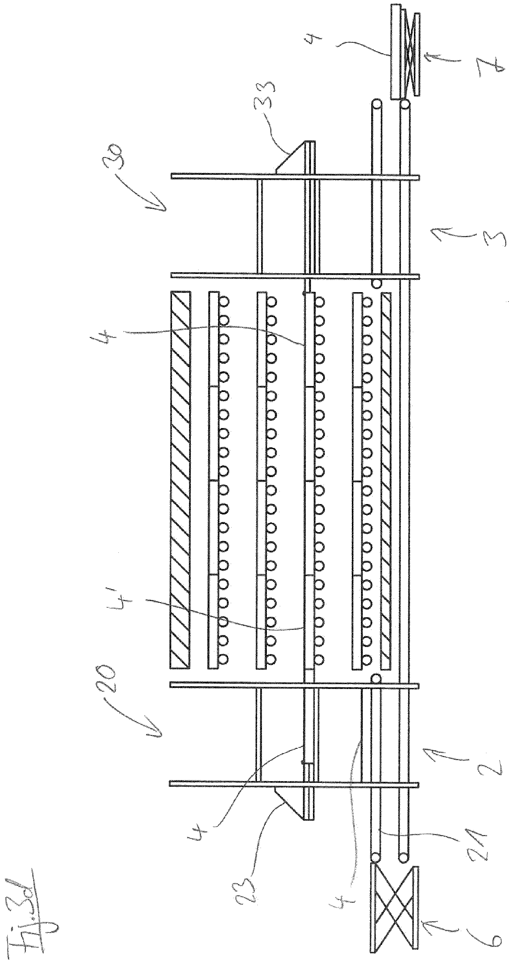

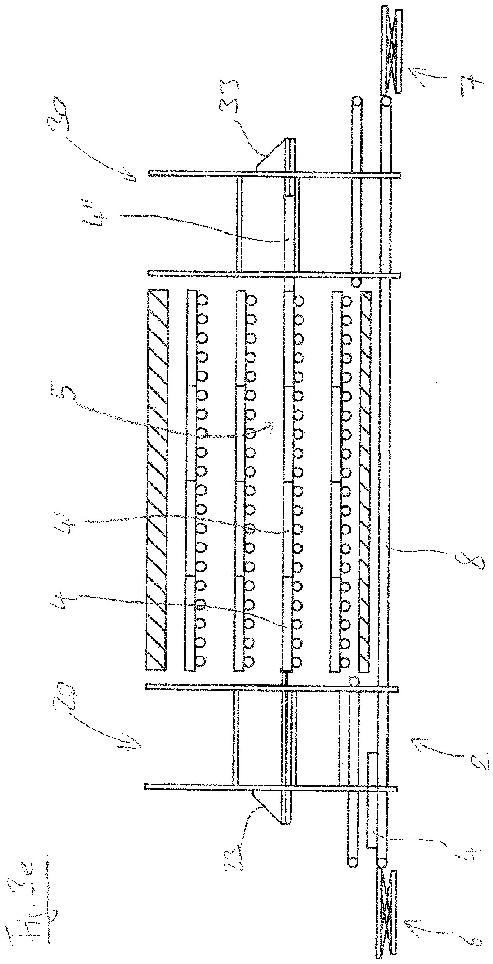

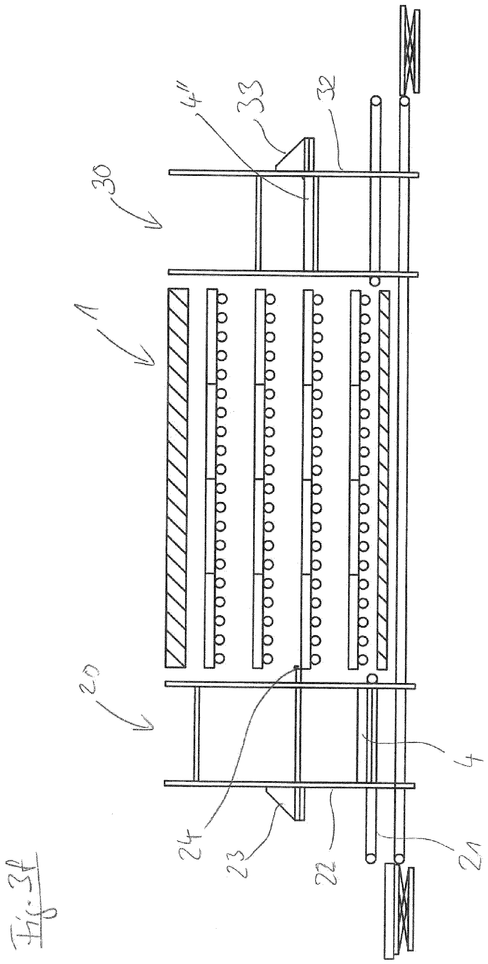

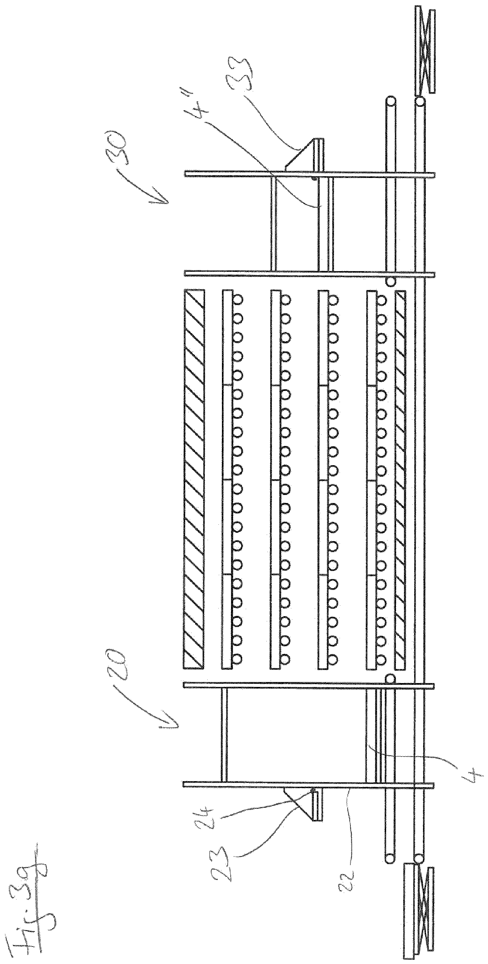

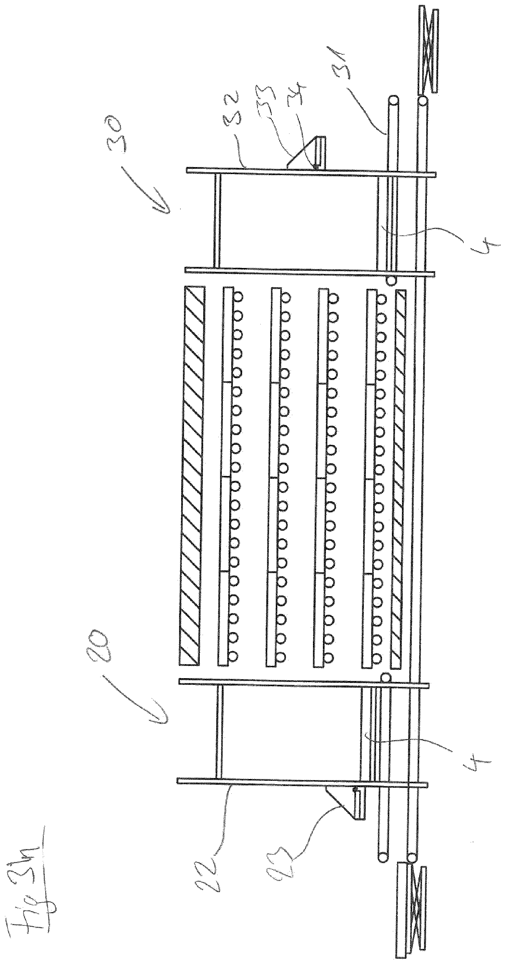

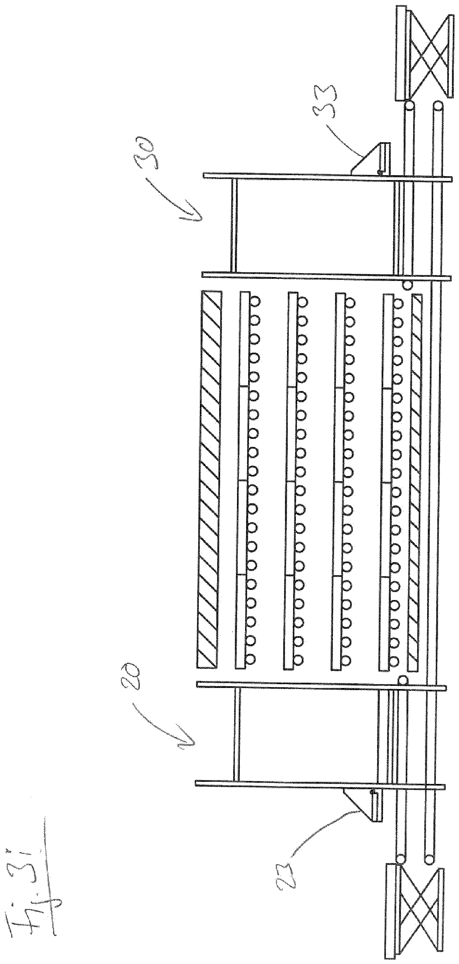

Wie in Figur 2b ersichtlich, weist die Horizontalverschiebeeinheit 23 sogar zwei Kupplungseinheiten 24 auf, die synchron bewegt werden. Aus Gründen der Übersichtlichkeit, insbesondere in Hinblick auf Figuren 1 und 3 a-i, wird im Folgenden jedoch lediglich von einer Kupplungseinheit 24 gesprochen.

Mit der Beschickungsvorrichtung 20 ist es möglich, Backgutträger 4 am Aufgabeende 2 wahlweise in jede der Etagen 5 der Anlage 1 einzubringen. Ein Verfahren, mit dem die Beschickungsvorrichtung 20 betrieben werden kann, ergibt sich aus den späteren Erläuterungen eines Verfahrens zum Betreiben der Anlage 1.Am Ausgabeende 3 der Anlage 1 ist eine Entnahmevorrichtung 30 vorgesehen. Diese Entnahmevorrichtung 30 ist baugleich mit der Beschickungsvorrichtung 20 und ist ebenfalls eine Horizontalverschiebeeinheit 33 mit Kupplungseinheit 34, die eine Vertikalfördereinrichtung 32 und eine Horizontalfördereinrichtung 31 aufweist. Zur Erläuterung der einzelnen Komponenten 31-34 sowie deren Zusammenspiel wird auf die entsprechende Beschreibung der Beschickungsvorrichtung 20 bzw. deren Komponenten 21-24 verwiesen. Wie aus den entsprechenden Erläuterungen ersichtlich ist, ist die Beschickungsvorrichtung 20 - und damit auch die Entnahmevorrichtung 30 - geeignet, Backgutträger 4 mithilfe der Horizontalverschiebeeinheit 23 bzw. 33 auf die Vertikalfördereinrichtung 22 bzw. 32 zu verschieben, diesen Backgutträger 4 dann vertikal zur Horizontalfördereinrichtung 21 bzw. 31 zu befördern und an diese zum Abtransport zu übergeben.

Am Aufgabeende 2 der Anlage 1 ist weiterhin ein Beladetisch 6, am Ausgabeende 3 ein Entladetisch 7 vorgesehen. Außerdem ist noch eine Backgutträgerrückführung 8 in Form eines endlosen Transportbandes im unteren Bereich der Anlage 1 vorgesehen. Backgutträger 4 mit darauf befindlichen, fertig gebackenen Teiglingen können von der Horizontalfördereinrichtung 31 der Entnahmevorrichtung 30 auf den Entladetisch 7 befördert werden. Dort können die Teiglinge manuell oder durch eine nicht dargestellte Maschine (beispielsweise durch Aufkrabbeln) vom Backgutträger 4 entnommen werden. Der Backgutträger 4 kann anschließend durch den Entladetisch 7 auf die Höhe der Backgutträgerrückführung 8 gebracht und an diese übergeben werden. Die Backgutträgerrückführung 8 kann den Backgutträger 4 dann zum Beladetisch 6 transportieren, wo der Backgutträger 4 mit neuen Teiglingen manuell oder durch eine nicht dargestellte Maschine belegt werden kann. Anschließend kann der Backgutträger 4 mit den Teiglingen der Horizontalfördereinrichtung 21 der Beschickungsvorrichtung 20 zugeführt werden, um die Anlage 1 zu durchlaufen.

Die Funktionsweise der Anlage 1 sowie der Beschickungs- und Entnahmevorrichtungen 20, 30 wird durch die nachfolgende Beschreibung des erfindungsgemäßen Verfahrens zum Betrieb der Anlage 1 anhand der Figuren 3 a-i weiter verdeutlicht.

In Figur 3a ist die Anlage 1 gemäß Figur 1 dargestellt. In den einzelnen Etagen 5 der Anlage 1 sind Backgutträger 4 angeordnet, die jeweils so auf Stoß nebeneinander liegen, dass ein Verschieben des dem Aufgabeende 2 nächstliegenden Backgutträgers 4' in Richtung 90 des Ausgabeendes 3 zu einem Verschieben des dem Ausgabeende 3 nächstliegenden Backgutträgers 4" in dieselbe Richtung 90 führt. Auf der Vertikalfördereinrichtung 22 der Beschickungsvorrichtung 20 befindet sich ebenfalls ein Backgutträger 4, der mit zu backenden Teiglingen (nicht dargestellt) belegt ist. Die Teiglinge (nicht dargestellt) auf dem Backgutträger auf der Vertikalfördereinrichtung 32 der Entnahmevorrichtung 30 sind bereits fertig gebacken.

In einem ersten Schritt (Figur 3b) wird der Backgutträger 4 auf der Vertikalfördereinrichtung 22 der Beschickungsvorrichtung 20 so verfahren, dass er sich auf derselben Höhe wie die Backgutträger 4 in einer der Etagen 5 der Anlage 1 befindet. Die Horizontalverschiebeeinheit 23 wird vertikal so verfahren, dass sich das Kupplungselement 24 knapp über dem Backgutträger 4 auf der Vertikalfördereinrichtung 22 der Beschickungsvorrichtung 20 befindet. Außerdem wird das als Haken ausgebildete Kupplungselement 24 so verfahren, dass das freie Ende des Hakens sich senkrecht über einer zum Eingriff des Hakens vorgesehenen Ausnehmung im Backgutträger 4 befindet.

Die Vertikalfördereinrichtung 32 der Entnahmevorrichtung 30 verfährt den darauf befindlichen Backgutträger 4 soweit in vertikaler Richtung nach unten, dass dieser auf der Horizontalfördereinrichtung 31 der Entnahmevorrichtung 30 zu liegen kommt. Die Horizontalverschiebeeinheit 33 und das daran angeordnete Kupplungselement 34 werden vertikal bzw. horizontal so verfahren, dass sich das freie Ende des als Haken ausgebildeten Kupplungselementes 34 über eine zum Eingriff des Hakens vorgesehenen Ausnehmung im, dem Ausgabeende 3 nächstliegenden Backgutträger 4" der Etage 5, auf deren Höhe sich der Backgutträger 4 auf der Beschickungsvorrichtung 20 ist, befindet.

Im nächsten Schritt (Figur 3c) werden die Horizontalverschiebeeinheiten 23, 33 der Beschickungsvorrichtung 20 und der Entnahmevorrichtung 30 derart vertikal verfahren, dass die jeweils als Haken ausgebildeten Kupplungselemente 24, 34 mit den vorgesehenen Ausnehmungen an den Backgutträgern 4, 4" in Eingriff gebracht werden. Dadurch wird der Backgutträger 4 auf der Beschickungsvorrichtung 20 zug- und druckfest mit der Horizontalverschiebeeinheit 23 gekuppelt. Das Gleiche gilt für den Backgutträger 4" am Ausgabeende 3 der Anlage 1, der nunmehr zug- und druckfest mit der Horizontalverschiebeeinheit 33 gekuppelt ist.

Die Vertikalfördereinrichtung 32 der Entnahmevorrichtung 30 wird so verfahren, dass der Backgutträger 4", der mit der Horizontalverschiebeeinheit 33 gekuppelt ist, ausschließlich horizontal bewegt werden muss, um auf der Vertikalfördereinrichtung 32 zu liegen zu kommen.

Die Horizontalfördereinrichtung 31 der Entnahmevorrichtung 30 transportiert den im vorherigen Schritt auf sie abgelegten Backgutträger 4 auf den Entladetisch 7. Dort können die auf dem Backgutträger 4 aufliegenden, fertig gebackenen Teiglinge entnommen werden.

Der Beladetisch 6 stellt einen mit zu backenden Teiglingen bestückten Backgutträger 4 bereit, der an die Horizontalfördereinrichtung 21 übergeben wird.

Anschließend (Figur 3d) verfährt die Horizontalverschiebeeinheit 23 der Beschickungsvorrichtung 20 den mit ihr gekuppelten Backgutträger 4 horizontal, so dass dieser auf Stoß mit dem, dem Aufgabeende 2 nächstliegenden Backgutträger 4' der Etage, in die er eingeschoben werden soll, liegt. Dabei wird der Backgutträger 4 durch die Horizontalverschiebeeinheit 23 zunächst beschleunigt, dann jedoch wieder abgebremst, so dass praktisch kein Impuls an den Backgutträger 4' übertragen wird. Dazu ist vorgesehen, dass die Geschwindigkeit des Backgutträgers 4, bevor er mit dem Backgutträger 4' in Kontakt kommt, auf einen geringen Wert von weniger als 20 mm/s reduziert wird. Sofern es überhaupt zu einer Impulsübertragung kommt, kann diese von der Horizontalverschiebeeinheit 33 der Entnahmevorrichtung 30, die mit dem, dem Ausgabeende 3 nächstliegenden Backgutträger 4" derselben Etage 5 gekoppelt ist, abgefangen werden. In jedem Fall ist eine solche Impulsübertragung aber so gering, dass die auf den Backgutträgern 4, 4', 4" befindlichen Teiglinge nicht in Bewegung relativ zu den jeweiligen Backgutträgern 4, 4', 4", auf denen sie aufliegen, geraten.

Sowohl die Beschleunigung als auch das Abbremsen des Backgutträgers 4 sind in diesem Schritt so gewählt, dass die auf dem Backgutträger 4 befindlichen Teiglinge nicht in Bewegung relativ zum Backgutträger 4 geraten.

Die Horizontalfördereinrichtung 21 der Beschickungsvorrichtung 20 stellt den vom Beladetisch 6 kommenden Backgutträger 4 an der Übergabeposition 210 bereit. Der Entladetisch 7 befördert den Backgutträger 4, von dem alle Teiglinge entnommen wurden, zur Backgutträgerrückführung 8.

Im nächsten Schritt (Figur 3e) werden die Horizontalverschiebeeinheiten 23, 33 synchron in horizontaler Richtung bewegt, so dass der mit der Horizontalverschiebeeinheit 23 gekuppelte Backgutträger 4 an die Stelle des vormals dem Aufgabeende 2 nächstliegenden Backgutträgers 4' tritt. Mit diesen beiden Backgutträgern 4, 4' verschieben sich auch alle anderen Backgutträger 4 in derselben Etage 5, insbesondere auch der mit der Horizontalverschiebeeinheit 33 der Entnahmevorrichtung 30 gekuppelte Backgutträger 4". Sowohl die Beschleunigung als auch das Abbremsen der Backgutträger 4, 4', 4" sind in diesem Schritt so gewählt, dass die auf den Backgutträgern 4, 4', 4" befindlichen Teiglinge nicht in Bewegung relativ zu den Backgutträgern 4, 4', 4" geraten. Da der Backgutträger 4" mit der Horizontalverschiebeeinheit 33 der Entnahmevorrichtung 30 gekuppelt ist, welche synchron mit der Horizontalverschiebeeinheit 23 die Beschickungsvorrichtung 20 bewegt wird, besteht keine Gefahr, dass sich während des Abbremsens Abstände oder Lücken zwischen den einzelnen Backgutträgern 4, 4', 4" ergeben.

Die Backgutträgerrückführung 8 transportiert den von dem Endladetisch 7 stammenden Backgutträger 4 zum Beladetisch 6.

Anschließend (Figur 3f) wird die Beschickungsvorrichtung 20 bzw. die Horizontalverschiebeeinheit 23 vom vormals damit gekuppelten Backgutträger 4 entkuppelt. Dazu wird die Horizontalverschiebeeinheit 23 in vertikaler Richtung nach oben verfahren, wodurch sich die als Haken ausgebildete Kupplungseinheit 24 aus der vorher beschriebenen Ausnehmung im Backgutträger 4 entfernt. Die Vertikalfördereinrichtung 22 wird so verfahren, dass sie durch die Horizontalfördereinrichtung 21 bereitgestellten Backgutträgern 4 aufgenommen wird.

Die Horizontalverschiebeeinheit 33 der Entnahmevorrichtung 30 zieht den mit ihr gekuppelten Backgutträger 4" aus der Anlage 1 heraus, so dass der Backgutträger 4" vollständig auf der Vertikalfördereinrichtung 32 zu liegen kommt.

Im nächsten Schritt (Figur 3g) wird die Horizontalverschiebeeinheit 33 der Entnahmevorrichtung 30 von dem vormals mit ihr gekuppelten Backgutträger 4" entkuppelt. Dies verläuft analog zum Entkuppeln der Horizontalverschiebeeinheit 23 der Beschickungsvorrichtung 20, weshalb auf die entsprechenden Ausführungen zu Figur 3g verwiesen wird.

Die Horizontalverschiebeeinheit 23 der Beschickungsvorrichtung 20 fährt ihre Kupplungsvorrichtung 24 in die Aufgabenstellung zurück. Die Vertikalfördereinrichtung 22 der Beschickungsvorrichtung befördert den auf ihr aufliegenden Backgutträger 4 auf die Höhe der Backgutträger 4 einer Etage 5 der Anlage 1. Im dargestellten Beispiel handelt es sich bei der Etage 5 um eine andere Etage 5 als in Figur 3b.

Anschließend (Figur 3h) wird die Horizontalverschiebeeinheit 23 der Beschickungsvorrichtung 20 so vertikal verfahren, dass sie sich auf der richtigen Höhe zum Kuppeln mit dem Backgutträger 4 auf der Vertikalfördereinrichtung 22 befindet.

Die Vertikalfördereinrichtung 32 der Entnahmevorrichtung 30 wird derweil so verfahren, dass der darauf aufliegende Backgutträger 4 auf der Horizontalfördereinrichtung 31 abgelegt wird. Die Horizontalverschiebeeinheit 33 der Entnahmevorrichtung 30 fährt ihre Kupplungsvorrichtung 34 in die Aufgabenstellung zurück.

Danach (Figur 3i) wird die Horizontalverschiebeeinheit 33 der Entnahmevorrichtung 30 auf die gleiche Höhe verfahren wie die Horizontalverschiebeeinheit 23 der Beschickungsvorrichtung 20. Das beschriebene Verfahren zur Beschickung der Anlage 1 kann dann erneut - allerdings auf einer anderen Etage 5 als beim beschriebenen Durchlauf - durchgeführt werden.

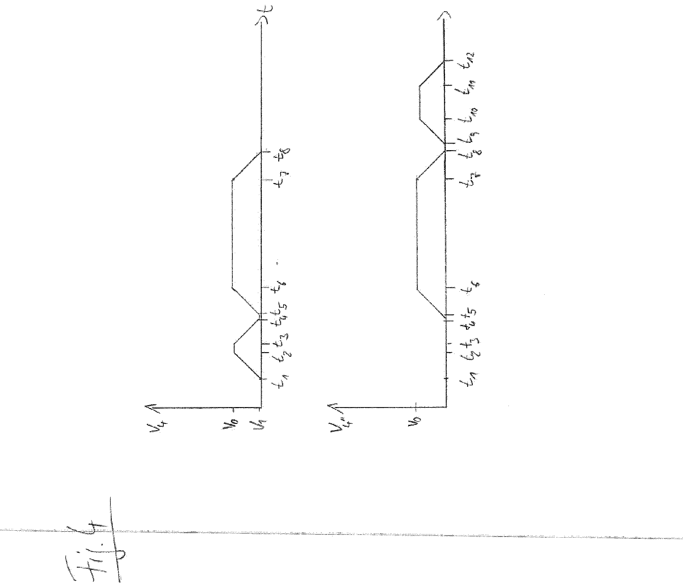

In Figur 4 sind beispielhaft Geschwindigkeits-Zeit-Diagramme für die mit den Horizontalverschiebeeinheiten 23, 33 der Beschickungsvorrichtung 20 bzw. der Entnahmevorrichtung 30 gekuppelten Backgutträger 4, 4" während des Verfahrens nach Figuren 3a-i dargestellt. Im oberen Bereich ist die Geschwindigkeit des zeitweise mit der Horizontalverschiebeeinheit 23 der Beschickungsvorrichtung 20 gekuppelten Backgutträgers 4 gezeigt, während die untere Kurve die Geschwindigkeit des zeitweise mit der Horizontalverschiebeeinheit 33 der Entnahmevorrichtung 30 gekuppelten Backgutträgers 4" zeigt.

Zu einem Zeitpunkt t1, zu dem wenigstens die Horizontalverschiebeeinheit 23 der Beschickungsvorrichtung 20 mit dem Backgutträger 4 auf der Vertikalfördereinrichtung 22 der Beschickungsvorrichtung 20 gekuppelt ist (vergleiche Figur 3c), wird dieser Backgutträger 4 im Zeitraum bis zum Zeitpunkt t2 auf eine Geschwindigkeit v0 beschleunigt. Die Beschleunigung ist dabei so gewählt, dass auf dem Backgutträger 4 befindliche Teiglinge nicht in Relativbewegung zum Backgutträger 4 geraten. Bis zum Zeitpunkt t2 wird die Geschwindigkeit v0 erreicht und bis zum Zeitpunkt t3 gehalten. Anschließend wird die Geschwindigkeit bis zum Zeitpunkt t4 auf eine Geschwindigkeit v1 nahe Null reduziert. Die Bremsbeschleunigung ist dabei erneut so gewählt, dass auf dem Backgutträger 4 befindliche Teiglinge nicht in Relativbewegung zum Backgutträger 4 geraten.

Zum Zeitpunkt t4 oder kurz danach liegt der Backgutträger 4 an dem Backgutträger 4', der dem Aufgabeende 3 am nächsten ist, an (vergleiche Figur 3d). Aufgrund der geringen Geschwindigkeit v1 entsteht dabei praktisch keine Impulsübertragung. Spätestens zum Zeitpunkt t4 ist auch die Horizontalverschiebeeinheit 33 der Entnahmevorrichtung 30 mit dem Backgutträger 4" gekuppelt, und kann gegebenenfalls auftretende kleine Impulse ohne weiteres abfangen.

Die Horizontalverschiebeeinheit 23 der Beschickungsvorrichtung 20 wird ab dem Zeitpunkt t5 ausgehend von Geschwindigkeit v1 bis zum Zeitpunkt t6 auf Geschwindigkeit v0 beschleunigt. Praktisch zeitgleich wird die Horizontalverschiebeeinheit 33 der Entnahmevorrichtung 30 ab einem Zeitpunkt kurz vor Zeitpunkt t5 ausgehend von Ruhe bis zum Zeitpunkt t6 auf Geschwindigkeit v0 beschleunigt. Dadurch wird sichergestellt, dass die beiden Horizontalverschiebeeinheiten 23, 33 ab dem Zeitpunkt t5 immer die gleiche Geschwindigkeit aufweisen.

Ab dem Zeitpunkt t6 wird die Geschwindigkeit der beiden Horizontalverschiebeeinheiten 23, 33 konstant auf v0 gehalten, bis die Geschwindigkeit ab dem Zeitpunkt t7 bei beiden Horizontalverschiebeeinheiten 23, 33 gleichförmig auf die Geschwindigkeit null zum Zeitpunkt t8 reduziert wird, womit der in Figur 3e dargestellte Zustand erreicht wird. Auch hier sind die Beschleunigungen so gewählt, dass die auf den Backgutträgern 4, 4', 4" befindlichen Teiglinge nicht in Relativbewegung zu den jeweiligen Backgutträgern 4, 4', 4" geraten.

Im Zeitraum t9 bis t12 wird dann der mit der Horizontalverschiebeeinheit 33 der Entnahmevorrichtung 30 gekuppelte Backgutträger 4" auf die Geschwindigkeit v0 beschleunigt und wieder auf Null abgebremst, so dass der Backgutträger 4" von den übrigen Backgutträgern 4 der Etage 5 weggezogen wird (vergleiche Figur 3d). Die auftretenden Beschleunigungen sind so gewählt, dass keine Relativbewegung der Teiglinge gegenüber dem Backgutträger 4", auf dem sie aufliegen, auftritt.

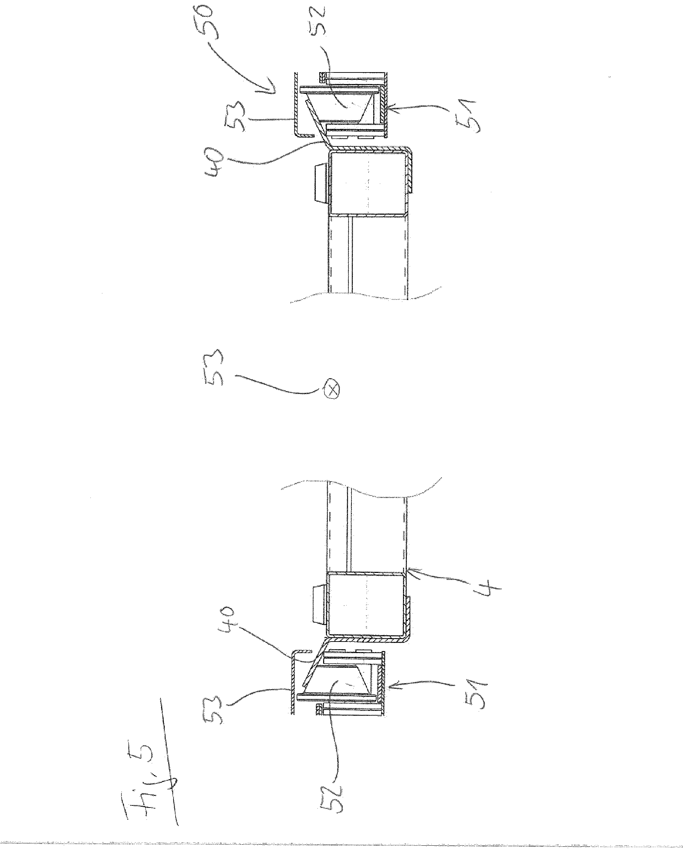

Die Backgutträger 4 liegen bei der Anlage 1 gemäß den Figuren 1 und 3a-i in jeder Etage 5 auf je einer ebenen Rollenbahn 9 auf. Anstelle von entsprechenden Rollenbahnen 9 können auch besondere Führungen 50 zur Führung der einzelnen Backgutträger 4 in den Etagen 5 vorgesehen sein. In Figuren 5 bis 7 sind verschiedene Ausführungsformen entsprechender Führungen 50 und Backgutträger 4 dargestellt.

In Figur 5 ist eine erste Führung 50 zusammen mit einem Backgutträger 4 im Schnitt dargestellt. Die Führung 50 weist dabei zwei, jeweils seitlich vom Backgutträger 4 angeordnete Rollenbahnen 51 auf, so dass der Backgutträger 4 zwischen diesen Rollenbahnen 51 frei schwebend geführt wird. Die einzelnen Rollen 52 der Rollenbahnen 51 laufen zur Mittelachse 53 der Führung 50 konisch zu. Der Backgutträger 4 weist zu den konisch geformten Rollen 52 entsprechende Führungsflächen 40 auf. Aufgrund dieser Führungsflächen 40 im Zusammenspiel mit den Rollen 52 kann sichergestellt werden, dass sich der Backgutträger 4 immer mittig in der Führung 50 befindet, also zentriert wird.

Die Führungsflächen 40 des Backgutträgers 4 liegen auf den Rollen 52 der Führung 50 auf. Damit sich die Führungsflächen 40 nicht ungewollt von den Rollen 52 abheben, sind die Führungsbleche 53 vorgesehen, so dass die Führung 50 mit den Rollen 52 und den Führungsblechen 53 die Führungsflächen 40 des Backgutträgers 4 umgreift. Dadurch kann verhindert werden, dass sich zwei in der Führung 50 befindliche, benachbarte Backgutträger 4 übereinander schieben können.

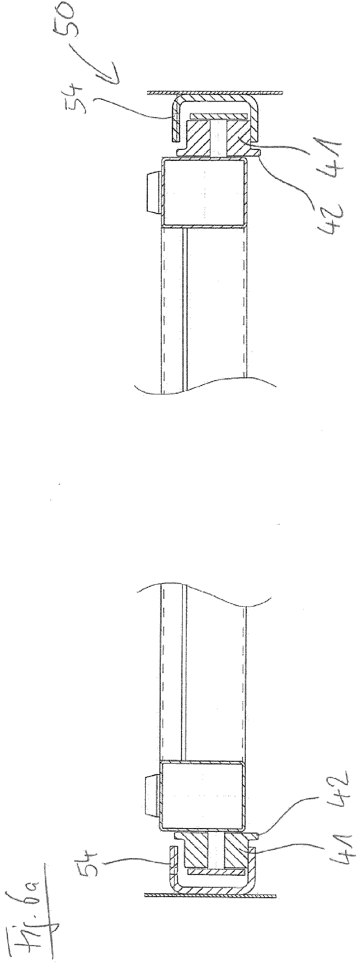

In Figur 6a ist eine alternative Ausführungsform einer erfindungsgemäßen Führung 50 zusammen mit einem erfindungsgemäßen Backgutträger 4 im Schnitt dargestellt. Die Führung 50 umfasst dabei zwei U-Profile als Führungsschienen 54, in denen an dem Backgutträger 4 befestigte Rollen 41 laufen. Die Rollen 41 weisen Spurkränze 42 auf, mit denen der Backgutträger 4 in der Führung 50 geführt wird, und werden von den Führungsschienen 54 umgriffen.

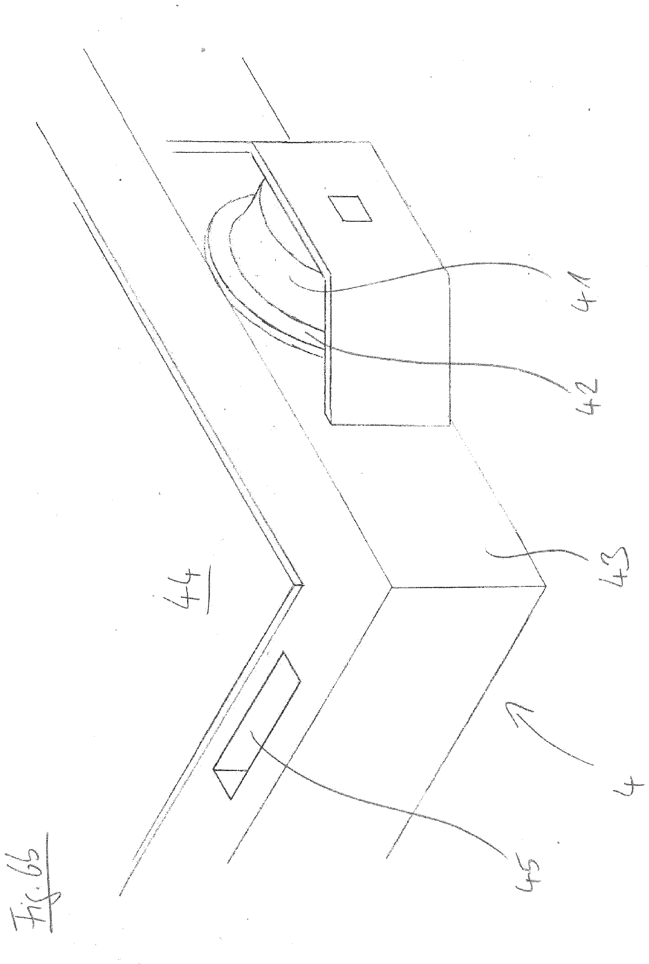

In Figur 6b ist eine Detaildarstellung des Backgutträgers 4 aus Figur 6a dargestellt. Der Backgutträger 4 umfasst eine Metallstruktur 43, an der die Rollen 41 drehbar befestigt sind. Auf der Metallstruktur 43 aufliegend ist eine Steinplatte 44 vorgesehen, auf der Teiglinge gebacken werden können. Weiterhin ist in der Metallstruktur 43 eine Ausnehmung 45 vorgesehen, in die Kupplungseinheiten 24,34 (vergleiche Figuren 1-3i) eingreifen können.

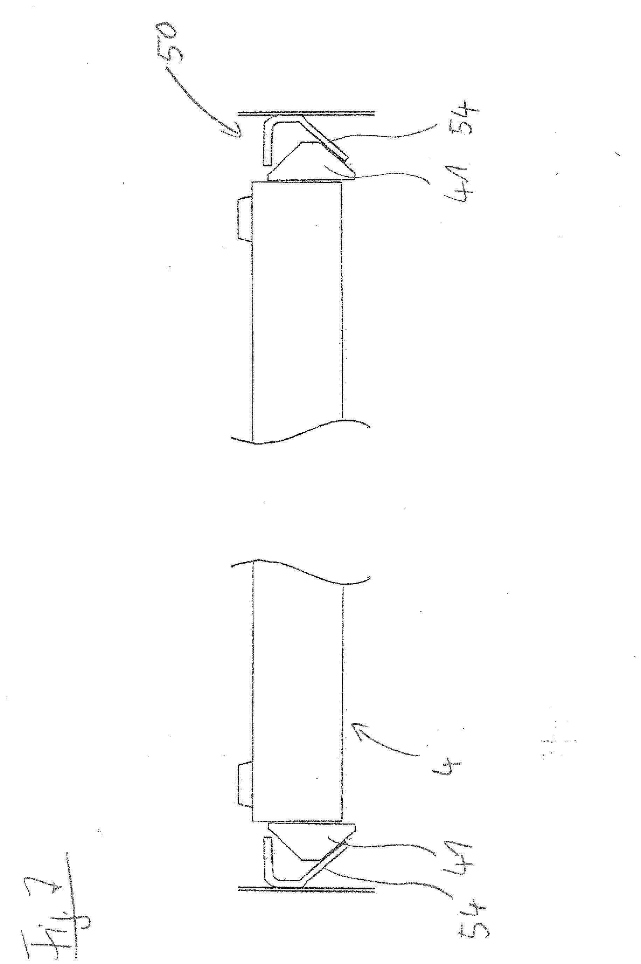

In Figur 7 ist eine mit Figur 6 vergleichbare Kombination aus Führung 50 und Backgutträger 4 gezeigt. Allerdings sind bei diesem Ausführungsbeispiel die Rollen 41 am Backgutträger 4 nach außen hin konisch geformt und die Führungen 50 weisen entsprechend geneigte Führungsschienen 54 auf. Dadurch wird erreicht, dass sich der Backgutträger 4 mittig in der Führung 50 zentriert. Die Rollen 41 werden dabei von den Führungsschienen 54 umgriffen, so dass sich zwei in der Führung 50 benachbarte Backgutträger 4 nicht aufeinander schieben können.

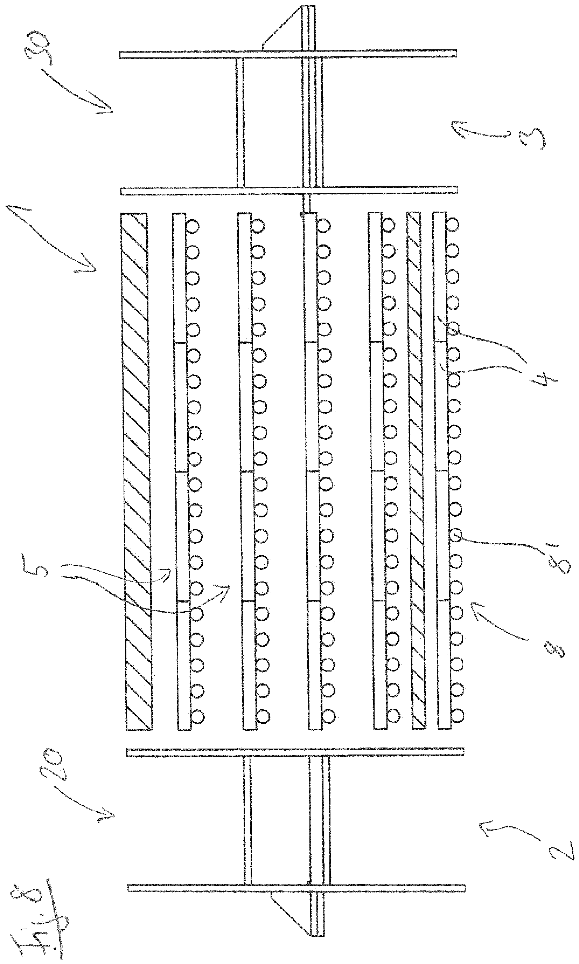

In Figur 8 ist eine zweite Ausführungsform einer erfindungsgemäßen Anlage 1 gezeigt. Die Anlage 1 entspricht in weiten Teilen derjenigen aus Figur 1, wobei auch die Beschickung der Anlage 1 mit Backgutträgern, wie sie in Figuren 3 und 4 veranschaulicht ist, im Wesentlichen analog erfolgt. Es wird daher auf die oben stehenden Ausführungen verwiesen. Im Folgenden wird lediglich auf die Unterschiede der Anlage 1 aus Figur 8 gegenüber der Anlage gemäß der ersten Ausführungsform eingegangen.

Die Anlage 1 aus Figur 8 unterscheidet sich von der ersten Ausführungsform insbesondere in der Backgutträgerrückführung 8. Anstelle eines endlosen Transportbandes (vgl. Figur 1) ist bei der zweiten Ausführungsform eine Rollenbahn 8' vorgesehen, auf der mehrere Backgutträger 4 auf Stoß nebeneinander liegen. Um einen Backgutträger 4 bei dieser Ausführungsform vom Ausgabeende 3 zum Aufgabeende 2 zu transportieren, wird ein dem Durchschieben der Backgutträger 4 durch eine Etage 5 der Anlage 1 analoges Verfahren angewandt. Die Entnahmevorrichtung 30 schiebt einen mit ihr gekoppelten Backgutträger 4 am Ausgabeende 3 auf die Rollenbahn 8' der Backgutträgerrückführung 8 während gleichzeitig die Beschickungsvorrichtung einen mit ihr gekoppelten Backgutträger 4 am Aufgabeende 2 von der Rollenbahn 8' der Backgutträgerrückführung zieht. Die Backgutträgerrückführung bei der Ausführungsform aus Figur 8 erfolgt also analog zum Durchschieben der Backgutträger 4 durch die einzelnen Etagen 5 der Anlage 1 (vgl. insbesondere Figuren 3c bis 3f), nur in umgekehrte Richtung.

## Patentansprüche

1. Verfahren zum Betreiben einer Anlage (1) mit einem Aufgabeende (2) und einem Ausgabeende (3) zur zeitlich begrenzten Aufnahme von Backgutträgern (4) in mehreren übereinanderliegenden Etagen (5), wobei die Backgutträger (4) in den einzelnen Etagen (5) derart eng nebeneinander liegen, dass ein Verschieben des dem Aufgabeende (2) am nächstliegenden Backgutträgers (4') einer Etage (5) in Richtung des Ausgabeendes (3) zu einem Verschieben des dem Ausgabeende (3) am nächstliegenden Backgutträgers (4") derselben Etage (5) in die gleiche Richtung führt, wobei am Aufgabeende (2) eine Beschickungsvorrichtung (20) und am Ausgabeende (3) eine Entnahmevorrichtung (30) vorgesehen ist, **gekennzeichnet durch** die folgenden Schritte:
a. Zug- und druckfestes Kuppeln der Beschickungsvorrichtung (20) mit einem einzuschiebenden Backgutträger (4);
b. Zug- und druckfestes Kuppeln der Entnahmevorrichtung (30) mit dem, dem Ausgabeende (3) nächstliegenden Backgutträger (4");
c. Bewegen der Beschickungsvorrichtung (20), so dass der einzuschiebende Backgutträger (4) auf Stoß mit dem, dem Aufgabeende (2) nächstliegenden Backgutträger (4') liegt;
d. Synchrones Bewegen der Beschickungsvorrichtung (20) und der Entnahmevorrichtung (30), so dass der einzuschiebende Backgutträger (4) an die Stelle des dem Aufgabeende (2) im Ausgangszustand nächstliegenden Backgutträgers (4') rückt;
e. Bewegen der Entnahmevorrichtung (20), so dass der mit der Entnahmevorrichtung (20) gekoppelte Backgutträger (4") von den anderen Backgutträgern (4) weggezogen wird;
f. Entkuppeln der Beschickungsvorrichtung (20); und
g. Entkuppeln der Entnahmevorrichtung (30).

2. Verfahren nach Anspruch 1,
**dadurch gekennzeichnet, dass**
der oder die Backgutträger (4, 4', 4") in Schritten c, d und/oder e durch die Beschickungsvorrichtung (20) und/oder die Entnahmevorrichtung (30) jeweils zunächst beschleunigt und später abgebremst wird oder werden, wobei die Geschwindigkeitsänderungen beim Beschleunigen und/oder Abbremsen vorzugsweise so gewählt sind, dass die auf dem oder den Backgutträgern (4, 4', 4") befindlichen Teiglinge nicht in Bewegung relativ zu dem oder den Backgutträgern (4, 4', 4") geraten.

3. Verfahren nach Anspruch 1 oder 2,
**dadurch gekennzeichnet, dass**
das Bewegen der Beschickungsvorrichtung (20) in Schritt c für den daran gekuppelten Backgutträger (4) im Wesentlichen stoßfrei ist.

4. Verfahren nach einem der vorhergehenden Ansprüche,
**dadurch gekennzeichnet, dass**
der einzuschiebende Backgutträger (4) vor Schritt a auf der Höhe der Etage (5), in die der Backgutträger (4) eingeschoben werden soll, bereitgestellt wird.

5. Anlage (1) mit einem Aufgabeende (2) und einem Ausgabeende (3) zur zeitlich begrenzten Aufnahme von Backgutträgern (4) in mehreren übereinanderliegenden Etagen (5), wobei die Backgutträger (4) in den einzelnen Etagen (5) derart nebeneinander liegen, dass ein Verschieben des dem Aufgabeende (2) am nächstliegenden Backgutträgers (4') in Richtung des Ausgabeendes (3) zu einer Verschiebung des dem Ausgabeende (3) am nächstliegenden Backgutträgers (4") derselben Etage in die gleiche Richtung führt, wobei am Aufgabeende (2) eine Beschickungsvorrichtung (20) und am Ausgabeende (3) eine Entnahmevorrichtung (30) vorgesehen ist,
**dadurch gekennzeichnet, dass**
die Beschickungsvorrichtung (20) und die Entnahmevorrichtung (30) jeweils eine Horizontalverschiebeeinheit (23, 33) umfassen, wobei die Horizontalverschiebeeinheit (23, 33) eine Kupplungseinheit (24, 34) für eine lösbare zug- und druckfeste Verbindung mit einem Backgutträger (4) aufweist.

6. Anlage nach Anspruch 5,
**dadurch gekennzeichnet, dass**
die Anlage (1) ein Ofen oder ein Gärschrank ist.

7. Anlage nach Anspruch 5 oder 6,
**dadurch gekennzeichnet, dass**
die Anlage (1) in jeder Etage (5) Führungen (50) für die Backgutträger (4) aufweist, wobei die Führungen (50) in Richtung vom Aufgabeende (2) zum Ausgabeende (3) zu beiden Seiten der Backgutträger (4) angeordnet sind, wobei die Backgutträger (4) zwischen den Führungen (50) bevorzugt freischwebend sind.

8. Anlage nach Anspruch 7,
**dadurch gekennzeichnet, dass**
die Führungen (50) gegenüberliegende und vorzugsweise nach innen geneigte Führungsschienen (54) sind.

9. Anlage nach Anspruch 7,
**dadurch gekennzeichnet, dass**
die Führungen (50) jeweils zwei gegenüberliegende Rollenbahnen (51) umfassen, wobei die Rollen (52) der Rollenbahnen (51) vorzugsweise zur Mittelachse der Führung (50) geneigt sind.

10. Anlage nach einem der Ansprüche 7 bis 9,
**dadurch gekennzeichnet, dass**
die Führungen (50) die Backgutträger (4) so umgreifen, dass sich zwei benachbarte Backgutträger (4) nicht aufeinander schieben können.

11. Anlage nach einem der Ansprüche 5 bis 10,
**dadurch gekennzeichnet, dass**
eine Regelungsvorrichtung vorgesehen ist, die die Anlage (1) entsprechend dem Verfahren nach einem der Ansprüche 1 bis 4 steuert.

12. Anlage nach einem der Ansprüche 5 bis 10,
**dadurch gekennzeichnet, dass**
die Backgutträger (4, 4', 4") an jeweils gegenüberliegenden Seiten angeordneten Rollen (41) zum Rollen auf Führungen (50) aufweisen.

13. Anlage nach Anspruch 12,
**dadurch gekennzeichnet, dass**
die Rollen (41) ausgehend vom Backgutträger (4, 4', 4") nach außen hin konisch sind und/oder Spurkränze (42) aufweisen.

## Claims

1. Method for operating an installation (1) having an input end (2) and an output end (3) for the temporally limited reception of baked-good carriers (4) in a plurality of levels (5) located one above another, wherein the baked-good carriers (4) lie close together in the individual levels (5) such that the baked-good carrier (4') located closest to the input end (2) in one level (5) being displaced in the direction of the output end (3) causes the baked-good carrier (4") located closest to the output end (3) in the same level (5) to be displaced in the same direction, wherein a loading device (20) is provided at the input end (2) and a removal device (30) is provided at the output end (3), **characterized by** the following steps of:
a. coupling the loading device (20) in a tension- and compression-resistant manner to a baked-good carrier (4) to be pushed in;
b. coupling the removal device (30) in a tension- and compression-resistant manner to the baked-good carrier (4'') located closest to the output end (3);
c. moving the loading device (20) such that the baked-good carrier (4) to be pushed in is in contact with the baked-good carrier (4') located closest to the input end (2);
d. synchronously moving the loading device (20) and the removal device (30) such that the baked-good carrier (4) to be pushed in moves into the position of the baked-good carrier (4') located closest to the input end (2) in the initial state;
e. moving the removal device (20) such that the baked-good carrier (4") coupled to the removal device is pulled away from the other baked-good carriers (4);
f. uncoupling the loading device (20); and
g. uncoupling the removal device (30).

2. Method according to Claim 1,
**characterized in that**
the baked-good carrier(s) (4, 4', 4") is or are each first of all accelerated and subsequently decelerated by the loading device (20) and/or the removal device (30) in steps c, d and/or e, wherein the changes in speed during acceleration and/or deceleration are preferably chosen such that the pieces of dough located on the baked-good carrier(s) (4, 4', 4") do not start to move relative to the baked-good carrier(s) (4, 4', 4").

3. Method according to Claim 1 or 2,
**characterized in that**
the moving of the loading device (20) in step c is substantially jolt-free for the baked-good carrier (4) coupled thereto.

4. Method according to one of the preceding claims,
**characterized in that**
the baked-good carrier (4) to be pushed in is provided, before step a, at the height of the level (5) into which the baked-good carrier (4) is intended to be pushed.

5. Installation (1) having an input end (2) and an output end (3) for the temporally limited reception of baked-good carriers (4) in a plurality of levels (5) located one above another, wherein the baked-good carriers (4) lie close together in the individual levels (5) such that the baked-good carrier (4') located closest to the input end (2) being displaced in the direction of the output end (3) causes the baked-good carrier (4") located closest to the output end (3) in the same level to be displaced in the same direction, wherein a loading device (20) is provided at the input end (2) and a removal device (30) is provided at the output end (3), **characterized in that**
the loading device (20) and the removal device (30) each comprise a horizontal displacement unit (23, 33), wherein the horizontal displacement unit (23, 33) has a coupling unit (24, 34) for a releasable tension- and compression-resistant connection to a baked-good carrier (4).

6. Installation according to Claim 5,
**characterized in that**
the installation (1) is an oven or a proving cabinet.

7. Installation according to Claim 5 or 6,
**characterized in that**
the installation (1) has, in each level (5), guides (50) for the baked-good carriers (4), wherein the guides (50) are arranged on both sides of the baked-good carriers (4) in the direction from the input end (2) to the output end (3), wherein the baked-good carriers (4) are preferably suspended freely between the guides (50).

8. Installation according to Claim 7,
**characterized in that**
the guides (50) are opposite and preferably inwardly inclined guide rails (54).

9. Installation according to Claim 7,
**characterized in that**
the guides (50) each comprise two opposite roller tracks (51), wherein the rollers (52) of the roller tracks (51) are preferably inclined towards the central axis of the guide (50).

10. Installation according to one of Claims 7 to 9,
**characterized in that**
the guides (50) engage around the baked-good carriers (4) such that two adjacent baked-good carriers (4) cannot slide one on top of the other.

11. Installation according to one of Claims 5 to 10,
**characterized in that**
a regulating device is provided, which controls the installation (1) as per the method according to one of Claims 1 to 4.

12. Installation according to one of Claims 5 to 10,
**characterized in that**
the baked-good carriers (4, 4', 4") have rollers (41) arranged on respectively opposite sides for rolling on guides (50).

13. Installation according to Claim 12,
**characterized in that**
the rollers (41) are conical towards the outside starting from the baked-good carrier (4, 4', 4") and/or have flanges (42).

## Revendications

1. Procédé de fonctionnement d'un système (1) comprenant une extrémité d'alimentation (2) et une extrémité de sortie (3) et destiné à recevoir de manière limitée dans le temps des supports de produits à cuire (4) sur plusieurs étagères superposées (5), les supports de produits à cuire (4) étant disposés dans les étagères individuelles (5) tout près les uns des autres de sorte qu'un déplacement du support de produits à cuire (4'), le plus proche de l'extrémité d'alimentation (2), d'une étagère (5) en direction de l'extrémité de sortie (3) entraîne un déplacement du support de produits à cuire (4"), le plus proche de l'extrémité de sortie (3), de la même étagère (5) dans la même direction, un dispositif de chargement (20) étant prévu à l'extrémité d'alimentation (2) et un dispositif de retrait (30) étant prévu à l'extrémité de sortie (3), **caractérisé par** les étapes suivantes :
a. accoupler de manière résistante à la traction et à la pression le dispositif de chargement (20) à un support de produits à cuire (4) à insérer ;
b. accoupler de manière résistante à la traction et à la pression le dispositif de retrait (30) au support de produits à cuire (4") le plus proche de l'extrémité de sortie (3) ;
c. déplacer le dispositif de chargement (20) de telle sorte que le support de produits à cuire (4) à insérer soit en butée avec le support de produits à cuire (4') le plus proche de l'extrémité d'alimentation (2) ;
d. déplacer de manière synchrone le dispositif de chargement (20) et le dispositif de retrait (30) de telle sorte que le support de produits à cuire (4) à insérer prenne la place du support de produits à cuire (4') le plus proche de l'extrémité de chargement (2) à l'état initial ;
e. Déplacer le dispositif de retrait (20) de telle sorte que le support de produits à cuire (4") accouplé au dispositif de retrait (20) soit éloigné des autres supports de produits à cuire (4) ;
f. désaccoupler le dispositif de chargement (20) ; et
g. désaccoupler le dispositif de retrait (30).

2. Procédé selon la revendication 1,
**caractérisé en ce que**
le ou les supports de produits à cuire (4, 4', 4") sont tout d'abord accélérés puis freinés dans les étapes c, d et/ou e par le dispositif de chargement (20) et/ou le dispositif de retrait (30), les variations de vitesse pendant l'accélération et/ou le freinage sont de préférence choisies de telle sorte que les pâtons situés sur le ou les supports de produits à cuire (4, 4', 4") ne soient pas en mouvement par rapport au ou aux supports de produits à cuire (4, 4', 4").

3. Procédé selon la revendication 1 ou 2,
**caractérisé en ce que**
le déplacement du dispositif d'alimentation (20) à l'étape c destiné au support de produits à cuire (4) accouplé à celui-ci est sensiblement régulier.

4. Procédé selon l'une des revendications précédentes,
**caractérisé en ce que**
le support de produits à cuire (4) à insérer est placé avant l'étape a au niveau de l'étagère (5) dans laquelle le support de produits à cuire (4) doit être inséré.

5. Système (1) comprenant une extrémité d'alimentation (2) et une extrémité de sortie (3) et destiné à recevoir de manière limitée dans le temps des supports de produits à cuire (4) sur plusieurs étagères superposées (5),
les supports de produits à cuire (4) étant disposés dans les étagères individuelles (5) les uns à côté des autres de telle sorte qu'un déplacement du support de produits à cuire (4'), le plus proche de l'extrémité d'alimentation (2), en direction de l'extrémité de sortie (3) entraîne un déplacement du support de produits à cuire (4"), le plus proche de l'extrémité de sortie (3), de la même étagère dans la même direction, un dispositif de chargement (20) étant prévu à l'extrémité d'alimentation (2) et un dispositif de retrait (30) étant prévu à l'extrémité de sortie (3),
**caractérisé en ce que**
le dispositif de chargement (20) et le dispositif de retrait (30) comprennent chacun une unité de déplacement horizontal (23, 33), l'unité de déplacement horizontal (23, 33) comportant une unité d'accouplement (24, 34) destinée à être reliée de manière libérable et résistante à la traction et à la pression à un support de produits à cuire (4).

6. Système selon la revendication 5,
**caractérisé en ce que**
le système (1) est un four ou une armoire de fermentation.

7. Installation selon la revendication 5 ou 6,
**caractérisée en ce que**
le système (1) comporte dans chaque étagère (5) des guides (50) destinés aux supports de produits à cuire (4), les guides (50) étant disposés dans la direction allant de l'extrémité d'alimentation (2) à l'extrémité de sortie (3) des deux côtés des supports de produits à cuire (4), les supports de produits à cuire (4) étant disposés entre les guides (50) de préférence de manière à flotter librement.

8. Système selon la revendication 7,
**caractérisé en ce que**
les guides (50) sont des rails de guidage (54) opposés et de préférence inclinés vers l'intérieur.

9. Système selon la revendication 7,
**caractérisé en ce que**
les guides (50) comprennent chacun deux transporteurs à rouleaux opposés (51), les rouleaux (52) des transporteurs à rouleaux (51) étant de préférence inclinés par rapport à l'axe central du guide (50).

10. Système selon l'une des revendications 7 à 9,
**caractérisé en ce que**
les guides (50) enserrent les supports de produits à cuire (4) de telle sorte que deux supports de produits à cuire (4) adjacents ne peuvent pas se pousser l'un l'autre.

11. Système selon l'une des revendications 5 à 10,
**caractérisé en ce que**
un dispositif de régulation est prévu qui commande le système (1) conformément au procédé selon l'une des revendications 1 à 4.

12. Système selon l'une des revendications 5 à 10,
**caractérisé en ce que**
les supports de produits à cuire (4, 4', 4") comportent des rouleaux (41) disposés sur des côtés opposés et destinés à rouler sur des guides (50).

13. Système selon la revendication 12,
**caractérisé en ce que**
les rouleaux (41) sont coniques depuis le support de produits à cuire (4, 4', 4") en direction de l'extérieur et/ou comportent des brides (42).
